# EUROPEAN PATENT SPECIFICATION

(11) **EP 0 497 236 B1**
(45) Date of publication and mention of the grant of the patent: **13.09.1995**
(21) Application number: 92101246.4
(22) Date of filing: 27.01.1992
(51) Int. Cl.: F02D 41/14, G01N 27/416

(54) **Control system for a fuel mixture strength regulating device of an internal combustion engine**
System zur Steuerung einer Vorrichtung zur Regelung des Kraftstoff-Luftverhältnisses eines Verbrennungsmotors
Système de commande d'un dispositif de regulation du mélange air carburant pour moteur à combustion interne

(30) Priority: 29.01.1991 IT TO910049
(43) Date of publication of application: 05.08.1992
(73) Proprietor: MAGNETI MARELLI S.p.A., 20145 Milano (IT)
(72) Inventor: Nenzioni, Pietro, I-40100 Bologna (IT); Biagini, Luca, I-42019 Scandiano (IT)
(74) Representative: Cerbaro, Elena

(56) References cited:
- EP-A- 0 455 436
- DE-A- 3 313 783
- DE-A- 3 632 036
- DE-A- 3 936 333
- US-A- 4 177 770
- PATENT ABSTRACTS OF JAPAN vol. 9, no. 235 (M-415)(1958) 21 September 1985 & JP-A-60 090 938 (NISSAN JIDOSHA K.K.) 22 May 1985

## Description

The present invention relates to a system for controlling a fuel mixture strength regulating device of an internal combustion engine, of the type defined in the preamble of claim 1.

One of the major problems in engine design is the presence in the exhaust gas of harmful substances, such as unburnt hydrocarbons, carbon monoxide, nitrogen oxide, etc. For this reason, vehicles are fitted with a system for regulating the strength of the fuel mixture (by controlling a valve in the air intake manifold), and so improving combustion of the mixture and the efficiency of a catalyst, which provides for eliminating the harmful substances, and is most effective with a given stoichiometric value of the mixture. The above regulation depends on a special sensor for detecting the presence of oxygen in the exhaust gas.

Currently used systems comprise an oxygen sensor; an electronic block for biasing the sensor to a given voltage; a signal amplifier; an electronic control system; and an actuator for controlling the regulating valve. The main drawback of such systems lies in the electronic blocks being connected to respective interconnected reference grounds, thus resulting in a loop system that is highly sensitive to external electromagnetic disturbance, as well as internal disturbance caused by nearby high-voltage cables (on the electronic ignition system), and the extremely long wire required for connecting the sensor to the electronic control system, and which acts as an aerial for electromagnetic disturbance. Such systems are also highly sensitive to temperature, particularly the varying temperature of the reference grounds which, being interconnected, may result in offsetting of the reference voltage and, consequently also, the electric signals transmitted by the system.

A control system of the type defined in the preamble of claim 1 is disclosed in US-A-4,177,770. Furthermore, DE-A-3 313 783 shows and describes means for biasing the oxygen sensor to a given d.c. bias voltage.

It is an object of the present invention to provide a system of the above mentioned type comprising means for biasing the oxygen sensor and generating an output signal so that the latter can be correctly interpreted by the electronic control system for regulating the mixture strength.

According to the present invention, there is provided a system for controlling the fuel mixture strength regulating device of an internal combustion engine, as defined in claim 1.

A preferred, non-limiting embodiment of the present invention will be described by way of example with reference to the accompanying drawings, in which:

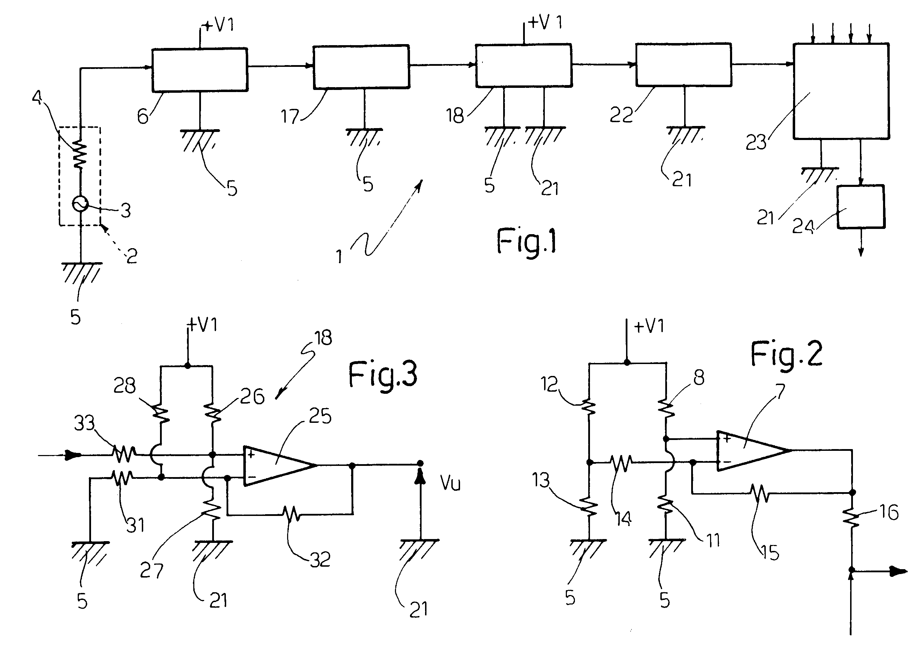

Fig.1 shows a block diagram of a system in accordance with the present invention;
Fig.s 2 and 3 show circuit diagrams of two blocks in the Fig.1 system.

Number 1 in Fig.1 indicates a system for controlling the fuel mixture strength regulating device of an internal combustion engine. Depending on the amount of oxygen detected in the exhaust gas, system 1 controls a regulating valve inside the air intake manifold, so as to achieve a given strength of the air-fuel mixture, which must be such as to provide for effective combustion of the mixture, and effective elimination of any harmful substances by a catalyst (not shown). The ideal stoichiometric value of the mixture strength is known to be about 14.7 of the air-fuel ratio.

System 1 comprises a known oxygen sensor 2, preferably of zirconium or titanium oxide, installed in the exhaust gas duct, and schematized electrically by a voltage source 3 and a resistor 4 series connected to source 3.

Source 3 is connected to a first reference ground 5 defined by the engine casing or a mechanical component connected to the same, and which is to be considered variable, i.e. having an electric potential varying according to the operating conditions of the engine (speed, temperature, etc.) and any on- or off-vehicle electromagnetic disturbance. The value of resistor 4 of an oxygen sensor is inversely proportional to the ambient temperature of the resistor.

As shown in Fig.s 1 and 2, system 1 series connected to sensor 2 presents an electronic block 6 for biasing sensor 2 to a given d.c. bias voltage +V1. As is known, to determine operation of the oxygen sensor, this is biased to a given voltage value, so that, when the engine is started up, the signal supplied to an electronic control system is in fact the bias voltage value, in that the value of resistor 4 is too high for a signal to be generated by the sensor. The signal received by the electronic control system is therefore interpreted as not being generated by the sensor. If, on the other hand, the signal oscillates about the bias voltage value, the electronic control system interprets it as being generated by the sensor, and processes it for regulating the mixture strength. Block 6 acts as a stabilized voltage source, the output signal of which is roughly equal to bias voltage +V1, by virtue of being defined by the difference between the signal generated by sensor 2 and voltage +V1. Block 6 comprises an operational amplifier 7; a first voltage divider connected to the non-inverting input of amplifier 7; a second voltage divider connected to the inverting input of amplifier 7; and a negative feedback loop for determining unit gain of amplifier 7.

The first voltage divider comprises a resistor 8, a first terminal of which is connected to the positive pole of a +V1 energy source (not shown). The second terminal of resistor 8 is connected to the non-inverting input of amplifier 7 and to a first terminal of a second resistor 11, the second terminal of which is connected to ground 5. The second voltage divider comprises a resistor 12, a first terminal of which is connected to the positive pole of the energy source. The second terminal of resistor 12 is connected, via a resistor 14, to the inverting input of amplifier 7 and to a first terminal of a resistor 13, the second terminal of which is connected to ground 5. The feedback loop is defined by a resistor 15 connecting the output of amplifier 7 to its inverting input. Downstream from the branch defined by the feedback loop, the output of amplifier 7 is connected to sensor 2 via a resistor 16. From the connection point of sensor 2 and block 6, there originates an electric cable connected to a signal amplifying block 17 in turn connected to ground 5. Block 17 is necessary in that the output signal of sensor 2 normally ranges between 0.1 and 1 V, whereas the means processing the signal preferably operate with signals of over 0.5 V. Resistors 8, 11, 14, 15 and 16 present the same value, whereas resistors 12 and 13 are respectively one and ten percent of the value of resistor 8. The actual bias voltage of sensor 2 therefore equals the algebraic sum of the voltage of ground 5 and bias voltage +V1, and, as such, is also variable.

System 1 also presents:
a block 18 for converting the output signal of block 17 relative to ground 5 into a signal relative to ground 21, which presents a constant reference voltage and is therefore normally referred to as the signal ground;
an analog/digital conversion block 22 connected to ground 21;
an electronic control system 23 connected to ground 21, for processing signals relative to the operating conditions of the engine (intake air temperature and density, engine speed, etc.) and the signal generated by the sensor and now converted by blocks 18 and 22 into a digital signal relative to ground 21; and
a block 24, enabled by electronic control system 23, for controlling the actuator regulating the valve in the air intake manifold.

As shown in Fig. 3, block 18 comprises an operational amplifier 25; a first voltage divider connected to the non-inverting input of amplifier 25; a second voltage divider connected to the inverting input of amplifier 25; and a negative feedback loop for determining unit gain of amplifier 25. Block 18 acts as a stabilized voltage source for generating a signal (amplified as defined in block 17) proportional to the output signal of block 6, but relative to ground 21. The first voltage divider comprises a resistor 26, a first terminal of which is connected to the positive pole of the energy source. The second terminal of resistor 26 is connected to the non-inverting input of amplifier 25 and to a first terminal of a second resistor 27, the second terminal of which is connected to ground 21. The second voltage divider comprises a resistor 28, a first terminal of which is connected to the positive pole of the energy source. The second terminal of resistor 28 is connected to the inverting input of amplifier 25 and to a first terminal of a resistor 31, the second terminal of which is connected to ground 5. The feedback loop is defined by a resistor 32 connecting the output of amplifier 25 to its inverting input. Block 17 is connected to the non-inverting input of amplifier 25 via a resistor 33.

Resistors 26, 27, 28, 31, 32 and 33 present the same value. Block 18 therefore regenerates and converts the signal from sensor 2 into a signal Vu (Fig.3) relative to ground 21, which is defined in control system 23 and maintained at a constant reference voltage. Ground 21 is also compulsorily isolated from any of the mechanical components on the vehicle, and, therefore, from ground 5, so that it is unaffected by the operating conditions of the engine, on- or off-vehicle electromagnetic disturbance, or differing temperatures in the various parts of the vehicle.

The advantages of the present invention will be clear from the foregoing description.

In particular, it provides for supplying the electronic control system with a signal totally unaffected by electromagnetic disturbance, thus enabling correct processing of incoming signals; more accurate regulation of the mixture strength; and, consequently, improved combustion and elimination of harmful substances. The above advantages also lead to others in terms of pollution and operation of the engine. Improved combustion efficiency, in fact, provides for reducing fuel consumption; reducing fouling of the combustion chamber and the engine in general; reducing wear of the engine; improving engine response, etc. System 1 is also easy to produce and install, both as a first-assembly component and in place of existing systems, in which case, no substantial or high-cost modifications are required to the vehicle. Consequently, in addition to being essential for ensuring effective regulation of the mixture strength, system 1 is also cheap to produce.

## Claims

1. A system for controlling the fuel mixture strength regulating device of an internal combustion engine, comprising:
a first variable reference ground (5) preferably consisting of the engine casing or a mechanical component connected to the same, the electric potential of which varies according to the operating conditions of the engine and the interaction of on- or off-vehicle electromagnetic fields;
an oxygen sensor (2) connected electrically to said first ground (5), and installed in the exhaust gas duct, for generating an electric signal corresponding to the amount of oxygen detected in the exhaust gas;
a first electronic block (6) connected to said first ground (5) and producing an output as a function of the signal generated by said sensor (2);
a second reference or signal ground (21) having a constant electric potential, and isolated in relation to said first ground (5);
a second electronic block (18) for converting the output signal of said first block (6) relative to said first ground (5) into a signal relative to said second ground (21);
an electronic control system (23) connected to said second ground (21), for processing signals relative to the operating conditions of the engine, for example intake air temperature and density, engine speed, and the output signal of said second block (18); and
a third electronic block (24), enabled by said electronic control system (23), for controlling an actuator regulating the strength of the air-fuel mixture supplied to the engine,
characterized in that said first electronic block (6) comprises means for biasing said sensor (2) to a given d.c. bias voltage (+V1), and so producing an output signal as a function of the difference between the signal defined by said bias voltage (+V1) and the signal generated by said sensor (2); the actual bias voltage being variable, by virtue of being defined by the algebraic sum of said bias voltage (+V1) and the electric potential of said first ground (5); and in that said first block (6) comprises a first operational amplifier (7); a first voltage divider connected to the non-inverting input of said first amplifier (7); a second voltage divider connected to the inverting input of said first amplifier (7); and a negative feedback loop for determining unit gain of said first amplifier (7),
the inputs and the output of the amplifier (7) being in electrical connection with said bias voltage and said electrical signal corresponding to the amount of detected oxygen respectively.

2. A system as claimed in Claim 1, characterised by the fact that it comprises a fourth block (17), connected to said first ground (5), for amplifying the output signal from said first block (6).

3. A system as claimed in Claim 1 and/or 2, characterised by the fact that it comprises a fifth electronic block (22), connected to said second ground (21), for converting the analog output signal from said second block (18) into a digital signal for supply to said electronic control system (23).

4. A system as claimed in Claim 3, characterised by the fact that said first voltage divider comprises a first resistor (8), a first terminal of which is connected to the positive pole of an electrical energy source having the value of said bias voltage (+V1), and the second terminal of which is connected to the non-inverting input of said first amplifier (7) and to a first terminal of a second resistor (11), the second terminal of which is connected to said first ground (5); said second voltage divider comprising a third resistor (12), a first terminal of which is connected to the positive pole of said source, and the second terminal of which is connected, via a fourth resistor (14), to the inverting input of said first amplifier (7) and to a first terminal of a fifth resistor (13), the second terminal of which is connected to said first ground (5).

5. A system as claimed in Claim 4, characterised by the fact that said feedback loop is defined by a sixth resistor (15) connecting the output of said first amplifier (7) to its inverting input; downstream from the branch defined by said feedback loop, the output of said first amplifier (7) being connected, via a seventh resistor (16), to said sensor (2) and to said third block (18).

6. A system as claimed in Claim 5, characterised by the fact that said first, second, fourth, sixth and seventh resistors (8, 11, 14, 15 and 16) present the same value, whereas said third and fifth resistors (12 and 13) are respectively one and ten percent of the value of said first resistor (8).

7. A system as claimed in at least one of the foregoing Claims, characterised by the fact that said third block (18) comprises a second operational amplifier (25); a third voltage divider connected to the non-inverting input of said second amplifier (25); a fourth voltage divider connected to the inverting input of said second amplifier (25); and a second negative feedback loop for determining unit gain of said second amplifier (25).

8. A system as claimed in Claim 7, characterised by the fact that said third voltage divider comprises an eighth resistor (26), a first terminal of which is connected to the positive pole of an energy source having the value of said bias voltage (+V1), and the second terminal of which is connected to the non-inverting input of said second amplifier (25) and to a first terminal of a ninth resistor (27), the second terminal of which is connected to said second ground (21); said fourth voltage divider comprising a tenth resistor (28), a first terminal of which is connected to the positive pole of said source, and the second terminal of which is connected to the inverting input of said second amplifier (25) and to a first terminal of an eleventh resistor (31), the second terminal of which is connected to said first ground (5).

9. A system as claimed in Claim 8, characterised by the fact that said second feedback loop i defined by a twelfth resistor (32) connecting the output of said second amplifier (25) to its inverting input.

10. A system as claimed in Claim 9, characterised by the fact that said eighth, ninth, tenth, eleventh and twelfth resistors (26, 27, 28, 31 and 32) present the same value.

## Patentansprüche

1. System zur Steuerung der Reguliervorrichtung für das Brennstoff-Luftverhältnis einer Brennkraftmaschine, mit
einer ersten variablen Bezugsmasse (5), die in bevorzugter Weise aus dem Maschinengehäuse oder einer mit demselben verbundenen mechanischen Komponente besteht, deren elektrisches Potential gemäß den Betriebsbedingungen der Maschine und der Wechselwirkung von am Fahrzeug auftretenden oder vom Fahrzeug entfernt auftretenden elektromagnetischen Feldern variiert,
einem Sauerstoff-Sensor (2), der elektrisch an die erste Masse (5) angeschaltet ist und der in dem Abgaskanal installiert ist, um ein elektrisches Signal zu erzeugen, welches der Sauerstoffmenge entspricht, die in dem Abgas detektiert wurde,
einem ersten Elektronik-Block (6), der mit der ersten Masse (5) verbunden ist und eine Ausgangsgröße als Funktion des von dem Sensor (2) erzeugten Signals erzeugt,
einer zweiten Bezugs-oder Signal-Masse (21) mit einem konstanten elektrischen Potential, die in bezug auf die erste Masse (5) isoliert ist,
einem zweiten Elektronik-Block (18) zum Umsetzen des Ausgangssignals des ersten Blocks (6), welches mit der ersten Masse (5) in bezug gesetzt ist, in ein Signal, welches mit der zweiten Masse (21) in bezug gesetzt ist,
ein elektronisches Steuersystem (23), welches mit der zweiten Masse (21) verbunden ist, um Signale zu verarbeiten, die in bezug stehen zu den Betriebsbedingungen der Maschine wie beispielsweise der Temperatur und der Dichte der Ansaugluft, der Maschinendrehzahl und um das Ausgangssignal des zweiten Blocks (18) zu verarbeiten, und
einem dritten Elektronik-Block (24), der durch das elektronische Steuersystem (23) in Bereitschaft gesetzt wird, um ein Stellglied zum Regulieren des Brennstoff-Luftverhältnisses der Luft-Brennstoffmischung, die der Maschine zugeführt wird, zu steuern,
**dadurch gekennzeichnet,** daß
der erste Elektronik-Block (6) eine Einrichtung enthält, um den Sensor (2) mit einer gegebenen Gleichspannungs-Vorspannung (+V1) vorzuspannen und um so ein Ausgangssignal als Funktion der Differenz zwischen dem Signal, welches durch die Vorspannung (+V1) definiert ist, und dem Signal, welches von dem Sensor (2) erzeugt wird, zu erzeugen, wobei die tatsächliche Vorspannung in Hinblick darauf variabel ist, daß sie durch die algebraische Summe aus der Vorspannung (+V1) und dem elektrischen Potential der ersten Masse (5) gebildet ist, und dadurch, daß der erste Block (6) einen ersten Operationsverstärker (7), einen mit dem nicht invertierenden Eingang des ersten Verstärkers (7) verbundenen ersten Spannungsteiler, einen mit dem invertierenden Eingang des ersten Verstärkers (7) verbundenen zweiten Spannungsteiler und eine Gegenkopplungsschleife zur Bestimmung der Einheitsverstärkung des ersten Verstärkers (7) enthält,
wobei jeweils die Eingänge und der Ausgang des Verstärkers (7) in elektrischer Verbindung mit der Vorspannung stehen und das elektrische Signal der detektierten Sauerstoffmenge entspricht.

2. System nach Anspruch 1, **dadurch gekennzeichnet,** daß es einen vierten Block (17) enthält, der mit der ersten Masse (5) verbunden ist, um das Ausgangssignal des ersten Blocks (6) zu verstärken.

3. System nach Anspruch 1 und/oder 2, **dadurch gekennzeichnet,** daß es einen fünften Elektronik-Block (22) enthält, der mit der zweiten Masse (21) verbunden ist, um das analoge Ausgangssignal des zweiten Blocks (18) in ein digitales Signal umzusetzen, um dieses dem elektronischen Steuersystem (23) zuzuführen.

4. System nach Anspruch 3, **dadurch gekennzeichnet,** daß der erste Spannungsteiler einen ersten Widerstand (8) enthält, dessen erster Anschluß mit dem positiven Pol einer elektrischen Energiequelle verbunden ist, der den Wert der Vorspannung (+V1) hat, und dessen zweiter Anschluß mit dem nicht invertierenden Eingang des ersten Verstärkers (7) und mit einem ersten Anschluß eines zweiten Widerstandes (11) verbunden ist, dessen zweiter Anschluß mit der ersten Masse (5) verbunden ist, daß der zweite Spannungsteiler einen dritten Widerstand (12) enthält, dessen erster Anschluß mit dem positiven Pol der Quelle verbunden ist, und dessen zweiter Anschluß über einen vierten Widerstand (14) mit dem invertierenden Eingang des ersten Verstärkers (7) und mit einem ersten Anschluß eines fünften Widerstandes (13) verbunden ist, dessen zweiter Anschluß mit der ersten Masse (5) verbunden ist.

5. System nach Anspruch 4, **dadurch gekennzeichnet,** daß die Rückkopplungsschleife durch einen sechsten Widerstand (15) definiert ist, der den Ausgang des ersten Verstärkers (7) mit dessen invertierendem Eingang verbindet, und daß stromabwärts von dem Zweig, der durch die Rückkopplungsschleife definiert ist, der Ausgang des ersten Verstärkers (7) über einen siebten Widerstand (16) mit dem Sensor (2) und dem dritten Block (18) verbunden ist.

6. System nach Anspruch 5, **dadurch gekennzeichnet,** daß der erste, der zweite, der vierte, der sechste und der siebte Widerstand (8, 11, 14, 15 und 16) den gleichen Widerstandswert haben, während der dritte und der fünfte Widerstand (12 und 13) ein Prozent bzw. zehn Prozent des Wertes des ersten Widerstandes (8) haben.

7. System nach wenigstens einem der vorhergehenden Ansprüche, **dadurch gekennzeichnet,** daß der dritte Block (18) einen zweiten Operationsverstärker (25), einen dritten Spannungsteiler, der an den nicht invertierenden Eingang des zweiten Verstärkers (25) angeschaltet ist, einen vierten Spannungsteiler, der an den invertierenden Eingang des zweiten Verstärkers (25) angeschaltet ist, und eine zweite Gegenkopplungsschleife enthält, um die Einheitsverstärkung des zweiten Verstärkers (25) zu bestimmen.

8. System nach Anspruch 7, **dadurch gekennzeichnet,**daß der dritte Spannungsteiler einen achten Widerstand (26) enthält, dessen erster Anschluß mit dem positiven Pol einer Energiequelle verbunden ist, die den Wert der Vorspannung (+V1) hat und dessen zweiter Anschluß mit dem nicht invertierenden Eingang des zweiten Verstärkers (25) und mit einem ersten Anschluß eines neunten Widerstandes (27) verbunden ist, dessen zweiter Anschluß mit der zweiten Masse (21) verbunden ist, wobei der vierte Spannungsteiler einen zehnten Widerstand (28) enthält, dessen erster Anschluß mit dem positiven Pol der genannten Quelle verbunden ist und dessen zweiter Anschluß mit dem invertierenden Eingang des zweiten Verstärkers (25) und mit einem ersten Anschluß eines elften Widerstandes (31) verbunden ist, dessen zweiter Anschluß mit der ersten Masse (5) verbunden ist.

9. System nach Anspruch 8, **dadurch gekennzeichnet,** daß die zweite Rückkopplungsschleife durch einen zwölften Widerstand (32) definiert ist, der den Ausgang des zweiten Verstärkers (25) mit dessen invertierendem Eingang verbindet.

10. System nach Anspruch 9, **dadurch gekennzeichnet,** daß der achte, der neunte, der zehnte, der elfte und der zwölfte Widerstand (26, 27, 28, 31 und 32) den gleichen Widerstandswert haben.

## Revendications

1. Système de commande d'un dispositif de régulation du mélange air carburant pour moteur à combustion interne, comprenant :
une première masse de référence variable (5) constituée de préférence par le carter du moteur ou par un composant mécanique raccordé à celui-ci, dont le potentiel électrique varie en fonction des conditions de marche du moteur et l'interaction des champs électromagnétiques du véhicule en marche ou à l'arrêt ;
un capteur d'oxygène (2) raccordé électriquement à la première masse (5) et monté dans la conduite des gaz d'échappement, pour produire un signal électrique correspondant à la quantité d'oxygène détectée dans le gaz d'échappement ;
un premier bloc électronique (6) raccordé à la première masse (5) et produisant une sortie en fonction du signal produit par le capteur (2) ;
une seconde référence ou masse de signal (21) ayant un potentiel électrique constant, et isolée par rapport à la première masse (5) ;
un second bloc électronique (18) destiné à convertir le signal de sortie du premier bloc (6) par rapport à la première masse (5) en un signal relatif à la seconde masse (21) ;
un système de commande électronique (23) raccordé à la seconde masse (21) pour traiter les signaux relatifs aux conditions de marche du moteur, la température d'air d'admission par exemple et la densité, la vitesse du moteur et le signal de sortie de ce second bloc (18) ; et
un troisième bloc électronique (24) validé par le système de commande électronique (23) pour commander un organe d'actionnement régulant la puissance du mélange air carburant amené au moteur ;
caractérisé en ce que le premier bloc électronique (6) comprend des moyens pour polariser le capteur (2) à une tension de polarisation donnée en courant continu (+V1) et produire ainsi un signal de sortie en fonction de la différence entre le signal défini par la tension de polarisation (+V1) et le signal produit par le capteur (2) ; la tension de polarisation réelle étant variable grâce au fait d'être définie par la somme algébrique de la tension de polarisation (+V1) et le potentiel électrique de la première masse (5) ; et en ce que le premier bloc (6) comprend un premier amplificateur opérationnel (7) ; un premier diviseur de tension raccordé à l'entrée de non-inversion du premier amplificateur (7) ; un second diviseur de tension raccordé à l'entrée d'inversion du premier amplificateur (7) ; et une boucle de rétroaction négative pour déterminer le gain d'unité du premier amplificateur (7),
les entrées et la sortie de l'amplificateur (7) étant en liaison électrique avec la tension de polarisation et le signal électrique correspondant respectivement à la quantité d'oxygène détectée.

2. Système selon la revendication 1, caractérisé par le fait de comprendre un quatrième bloc (17) connecté à la première masse (5) pour amplifier le signal de sortie provenant du premier bloc (6).

3. Système selon la revendication 1 et/ou 2, caractérisé par le fait de comprendre un cinquième bloc électronique (22) connecté à la seconde masse (21) pour convertir le signal de sortie analogique provenant du second bloc (18) en un signal numérique pour l'amener au système de commande électronique (23).

4. Système selon la revendication 3, caractérisé par le fait que le premier diviseur de tension comprend un premier résisteur (8) dont une première borne est raccordée au pôle positif d'une source d'énergie électrique ayant la valeur de la tension de polarisation (+V1) et dont la seconde borne est raccordée à l'entrée de non-inversion du premier amplificateur (7) et à la première borne d'un second résisteur (11), dont le second terminal est connecté à la première masse (5) ; le second diviseur de tension comprenant un troisième résisteur (12), dont la première borne est connectée au pôle positif de la source, et dont la seconde borne est connectée, par un quatrième résisteur (14) à l'entrée d'inversion du premier amplificateur (7) et à une première borne d'un cinquième résisteur (13), dont le second terminal est connecté à la première masse (5).

5. Système selon la revendication 4, caractérisé par le fait que la boucle de rétroaction est définie par un sixième résisteur (5) raccordant la sortie du premier amplificateur (7) à son entrée d'inversion ; en aval de la dérivation définie par la boucle de rétroaction, la sortie de ce premier amplificateur (7) étant connectée, par l'intermédiaire d'un septième résisteur (16) au capteur (2) et au troisième bloc (18).

6. Système selon la revendication 5, caractérisé par le fait que les premier, second, quatrième, sixième et septième résisteurs (8, 11, 14, 15 et 16) possèdent la même valeur tandis que les troisième et cinquième résisteurs (12 et 13) sont respectivement égaux à 1 et 10 % de la valeur du premier résisteur (8).

7. Système selon au moins l'une quelconque des revendications précédentes, caractérisé par le fait que le troisième bloc (18) comprend un second amplificateur opérationnel (25) ; un troisième diviseur de tension connecté à l'entrée de non-inversion du second amplificateur (25) ; un quatrième diviseur de tension raccordé à l'entrée d'inversion du second amplificateur (25) ; et une seconde boucle de rétroaction négative pour déterminer le gain d'unité du second amplificateur (25).

8. Système selon la revendication 7, caractérisé par le fait que le troisième diviseur de tension comprend un huitième résisteur (26), dont la première borne est raccordée au pôle positif d'une source d'énergie ayant la valeur de la tension de polarisation (+V1) et dont la seconde borne est raccordée à l'entrée de non-inversion du second amplificateur (25) et à la première borne d'un neuvième résisteur (27), dont la seconde borne est connectée à la seconde masse (21) ; le quatrième diviseur de tension comprenant un dixième résisteur (28), dont la première borne est raccordée au pôle positif de la source, et dont la seconde borne est connectée à l'entrée d'inversion du second amplificateur (25) et à une première borne d'un onzième résisteur (31), dont la seconde borne est connectée à la première masse (5).

9. Système selon la revendication 8, caractérisé par le fait que la seconde boucle de rétroaction est définie par un douzième résisteur (32) connectant la sortie du second amplificateur (25) à son entrée d'inversion.

10. Système selon la revendication 9, caractérisé par le fait que les huitième, neuvième, dixième, onzième et douzième résisteurs (26, 27, 28, 31 et 32) possèdent la même valeur.
